# EUROPÄISCHE PATENTSCHRIFT

(11) **EP 2 269 439 B1**
(45) Veröffentlichungstag und Bekanntmachung des Hinweises auf die Patenterteilung: **10.08.2016**
(21) Anmeldenummer: 09159790.6
(22) Anmeldetag: 08.05.2009
(51) Int. Cl.: A01D 43/08, B60K 5/08

(54) **Selbstfahrende landwirtschaftliche Erntemaschine mit zwei Verbrennungsmotoren**
Self-propelled agricultural harvesting machine with two combustion engines
Moissonneuse agricole automobile dotée de deux moteurs à combustion

(43) Veröffentlichungstag der Anmeldung: 05.01.2011
(60) Teilanmeldung: 14160479.3
(73) Patentinhaber: Deere & Company, Moline, IL 61265 (US)
(72) Erfinder: Bohrer, Stefan, 66606 St. Wendel (DE); Weis, Helmut, 66506 Maßweiler (DE); Favache, Serge, 66424 Homburg (DE)
(74) Vertreter: Holst, Sönke

(56) Entgegenhaltungen:
- EP-A1- 1 813 459
- DE-A1- 3 722 367
- DE-A1- 4 210 258
- DE-A1-102007 019 661
- GB-A- 667 949

## Beschreibung

Die Erfindung betrifft eine selbstfahrende landwirtschaftliche Erntemaschine, umfassend:
einen sich in einer Vorwärtsfahrtrichtung erstreckenden Rahmen, der durch im Eingriff mit dem Erdboden befindliche Mittel abgestützt wird und durch die genannten Mittel in der Vorwärtsrichtung bewegbar ist,
Arbeitsorgane zur Aufnahme und/oder Bearbeitung von Erntegut, die über einen Treibriemen antreibbar sind, der durch eine Riemenscheibe mit horizontal und quer zur Vorwärtsrichtung orientierter Drehachse antreibbar ist,
einen am Rahmen abgestützten ersten Verbrennungsmotor mit einer ersten Kurbelwelle,
einen am Rahmen abgestützten zweiten Verbrennungsmotor mit einer zweiten Kurbelwelle,
und ein in Vorwärtsrichtung vor den Verbrennungsmotoren angeordnetes Verbindungsgetriebe, das mit der ersten Kurbelwelle, der zweiten Kurbelwelle und der Riemenscheibe antriebsverbunden oder -bindbar ist,
wobei die beiden Verbrennungsmotoren bezüglich der Vorwärtsrichtung seitlich nebeneinander angeordnet sind und die Kurbelwellen sich in der Vorwärtsrichtung erstrecken.

### Stand der Technik

Selbstfahrende landwirtschaftliche Erntemaschinen werden in der jüngeren Vergangenheit mit immer leistungsstärkeren Verbrennungsmotoren ausgestattet, die bei Feldhäckslern derzeit bis über 800 kW abgeben können. Wegen der relativ geringen Stückzahlen, in denen derart leistungsstarke Motoren gefertigt werden, sind diese Motoren relativ preisaufwändig und in der Regel teurer als zwei Verbrennungsmotoren mit jeweils der halben Leistung. Weiterhin wird die gesamte Leistung des Motors nicht immer benötigt, - so ist sie beispielsweise beim Transport auf einer Straße oder bei der Grasernte nicht erforderlich -was zu einem schlechteren Wirkungsgrad des Motors als im Volllastbetrieb führt, weshalb vorgeschlagen wurde (EP 1 640 201 A1), eine selbstfahrende Erntemaschine mit zwei Verbrennungsmotoren auszustatten, von denen einer zur Bewältigung größerer Leistungsanforderungen dem anderen Verbrennungsmotor zuschaltbar ist.

Gemäß der EP 1 640 201 A1 sind die Kurbelwellen der beiden Verbrennungsmotoren quer zur Vorwärtsrichtung und horizontal orientiert, wobei ein Verbrennungsmotor in Vorwärtsrichtung vor dem anderen Verbrennungsmotor positioniert ist. Ein Stirnradgetriebe stellt eine Verbindung zwischen den Kurbelwellen beider Verbrennungsmotoren und dem Hauptantriebsstrang der Erntemaschine her. Zwischen einem der Verbrennungsmotoren und dem Stirnradgetriebe ist eine abschaltbare Kupplung angeordnet, um die Erntemaschine auch nur mit einem einzigen Verbrennungsmotor antreiben zu können, ohne den anderen Verbrennungsmotor mitlaufen lassen zu müssen. Beide Verbrennungsmotoren sind mit dem Stirnradgetriebe an einem Hilfsrahmen montiert, so dass sie eine kompakte, vormontagefähige Baugruppe bilden.

Ein anderer Feldhäcksler mit zwei Verbrennungsmotoren wird in der EP 1 813 459 A1 beschrieben. Die Verbrennungsmotoren sind quer zur Vorwärtsrichtung und hintereinander angeordnet. Ein Riemengetriebe verbindet die Kurbelwelle des rückwärtigen Verbrennungsmotors mit der Kurbelwelle des vorderen Verbrennungsmotors, die wiederum einen Triebriemen antreibt, der mit den größten Leistungsverbrauchern (Häckseltrommel und Gebläse) in Antriebsverbindung steht.

Die als gattungsbildend angesehene DE 10 2007 019 661 A1 beschreibt einen landwirtschaftlichen Feldhäcksler mit zwei seitlich nebeneinander angeordneten, sich in Fahrtrichtung erstreckenden Verbrennungsmotoren, deren Kurbelwellen über Gelenkwellen und ein Stirnradgetriebe mit einem Winkelgetriebe verbunden sind, das über eine quer liegende Welle eine Riemenscheibe antreibt, die über einen Hauptantriebsriemen die Häckseltrommel antreibt.

Die DE 37 22 367 A beschreibt einen landwirtschaftlichen Feldhäcksler mit einem einzigen, über der Hinterachse angeordneten Verbrennungsmotor, dessen Kurbelwelle sich in Fahrtrichtung nach vorn erstreckt und über eine Gelenkwelle mit einem Kegelrad-Verteilergetriebe verbunden ist, das eine sich quer zur Vorwärtsrichtung erstreckende Abtriebswelle antreibt, welche wiederum über einen Riementrieb eine Häckseltrommel in Drehung versetzt. Das Kegelrad-Verteilergetriebe treibt weiterhin die Vorderräder des Feldhäckslers mechanisch an, und von der mit der Gelenkwelle verbundenen Eingangswelle des Kegelrad-Verteilergetriebes wird der Antrieb für den Erntevorsatz und die Vorpresswalzen abgeleitet.

Die GB 667 949 A beschreibt ein Fahrzeug mit zwei Verbrennungsmotoren, die an jeweils einer Seite des Fahrzeugs unmittelbar vor einem Hinterrad oder hinter einem Vorderrad angeordnet sind. Bei einer Ausführungsform sind die Motoren rückwärtig des Vorderrads angeordnet und über jeweils eine sich in Fahrtrichtung erstreckende Welle mit je einem Winkelgetriebe verbunden. Die Winkelgetriebe treiben über ein weiteres, mittig zwischen den Winkelgetrieben angeordnetes Getriebe, ein Schaltgetriebe und ein Differenzialgetriebe die Hinterräder an.

Bei Antriebsanordnungen mit quer angeordneten Verbrennungsmotoren, wie sie in der EP 1 640 201 A und EP 1 813 459 A beschrieben werden, ist als nachteilig anzusehen, dass die mögliche Breite der Erntemaschine nur eine begrenzte Längsabmessung der Motoren zulässt und damit auch die maximale Leistung einschränkt. Dieser Nachteil wird bei den längs eingebauten Motoren vermieden (DE 10 2007 019 661 A), bei denen allerdings die Ausgangswelle des die Leistung der Verbrennungsmotoren zusammenfassenden Stirnradgetriebes in Längsrichtung angeordnet ist, was sich insofern als nachteilig erweist, dass ein weiteres Winkelgetriebe erforderlich ist, um einen seitlichen Riemenantrieb zu den größten Verbrauchern anzutreiben, welches den baulichen Aufwand und die Zahl der im Antriebsstrang liegenden, den Wirkungsgrad nachteilig beeinflussenden Zahneingriffe vergrößert.

### Aufgabe der Erfindung

Die der Erfindung zu Grunde liegende Aufgabe wird darin gesehen, eine Antriebsanordnung für eine selbstfahrende Erntemaschine mit mehreren, längs eingebauten Verbrennungsmotoren bereitzustellen, die auf einfache und wirkungsgradgünstige Weise einen Antrieb eines quer liegenden Antriebsriemens für den Antrieb der größeren Verbraucher der Erntemaschine ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

### Lösung der Aufgabe

Eine selbstfahrende landwirtschaftliche Erntemaschine umfasst einen sich in einer Vorwärtsfahrtrichtung erstreckenden Rahmen, der durch im Eingriff mit dem Erdboden befindliche Mittel (in der Regel Räder oder Gummiraupenlaufwerke) abgestützt wird und durch die genannten Mittel in der Vorwärtsrichtung bewegbar ist. Die Erntemaschine weist weiterhin Arbeitsorgane zur Aufnahme und/oder Bearbeitung von Erntegut auf, die über einen Treibriemen antreibbar sind, der durch eine Riemenscheibe mit horizontal und quer zur Vorwärtsrichtung orientierter Drehachse antreibbar ist. Am Rahmen sind seitlich nebeneinander zwei Verbrennungsmotoren angebracht, deren Kurbelwellen sich in der Vorwärtsrichtung erstrecken. Ein Verbindungsgetriebe ist in Vorwärtsrichtung vor den Verbrennungsmotoren angeordnet und besteht aus zwei Winkelgetrieben, beispielsweise Kegelradgetrieben, die mit jeweils einer Kurbelwelle der Verbrennungsmotoren einerseits und einer quer angeordneten Querwelle andererseits verbunden sind, die wiederum mit der Riemenscheibe verbindbar oder verbunden ist. Die Riemenscheibe ist auf einer ersten Seite des zweiten Winkelgetriebes angeordnet, während sich das erste Winkelgetriebe auf der zweiten Seite des zweiten Winkelgetriebes befindet.

Auf diese Weise erreicht man einen einfachen und wirkungsgradeffizienten Aufbau des Verbindungsgetriebes, das jeweils nur zwei kämmende Zahnräder benötigt, um von den Verbrennungsmotoren her die Querwelle und mit ihr die Riemenscheibe anzutreiben.

Bei einer bevorzugten Ausführungsform der Erfindung besteht die Möglichkeit, im Bedarfsfall (d. h. bei kleinem Antriebsleistungsbedarf, beispielsweise bei der Straßenfahrt oder Grasernte) nur einen der beiden Verbrennungsmotoren in Betrieb zu setzen und den anderen abzuschalten. Um den jeweils anderen Verbrennungsmotor nicht unnötig mitdrehen zu lassen, wird vorgeschlagen, zwischen der Kurbelwelle des ersten bzw. zweiten Verbrennungsmotors und der Querwelle eine Kupplung anzubringen, die ein Abtrennen des jeweils nicht benötigten Verbrennungsmotors vom Antriebsstrang erlaubt. Dabei ist bevorzugt, dass jeder der Verbrennungsmotoren abgeschaltet und vom Antriebsstrang getrennt werden kann, damit beide einem möglichst ähnlichen Verschleiß unterliegen. Die Kupplungen können sich an beliebiger geeigneter Stelle befinden, d. h. beim von der Riemenscheibe weiter beabstandeten, ersten Verbrennungsmotor an der Eingangsseite oder an der Ausgangsseite des Winkelgetriebes und beim der Riemenscheibe benachbarten Verbrennungsmotor an der Eingangsseite des Winkelgetriebes.

Die Querwelle kann neben dem Treibriemen auch ein Pumpenaggregat antreiben, das beispielsweise eine Hydropumpe zum Antrieb von Hydromotoren für den Vortrieb der Erntemaschine, eine Lenkpumpe, eine Hydropumpe zum Antrieb von Hydromotoren für einen Erntevorsatz oder eine Hydropumpe zur Ölversorgung der Steuerung des hydrostatischen Antriebs für den Vortrieb der Erntemaschine antreibt. Dieses Pumpenaggregat wird zweckmäßigerweise von der Ausgangsseite der erwähnten Kupplungen her angetrieben, beispielsweise von einer Welle her, die zwischen der ersten Kupplung des ersten Verbrennungsmotors und dem ersten Winkelgetriebe angeordnet ist, oder von Welle her, die zwischen der zweiten Kupplung des zweiten Verbrennungsmotors und dem zweiten Winkelgetriebe positioniert ist. Auch ein von der Querwelle her abgeleiteter Antrieb des Pumpenaggregats wäre denkbar.

Die Verbrennungsmotoren werden auf Grund ihrer relativ großen Masse unabhängig am Rahmen der Erntemaschine befestigt, in der Regel über schwingungsdämpfende Elemente. Die Winkelgetriebe und ggf. die zwischen den Verbrennungsmotoren und den Winkelgetrieben angeordneten Kupplungen können am zugehörigen Verbrennungsmotor befestigt werden. Um mögliche Toleranzen und Abweichungen der Einbaupositionen der Verbrennungsmotoren und der Winkelgetriebe auszugleichen und eine eventuelle, unerwünschte Übertragung von Schwingungen eines Verbrennungsmotors auf den anderen Verbrennungsmotor zu vermeiden, ist es bevorzugt, in die Querwelle zwischen den beiden Winkelgetrieben eine Gelenkwelle einzufügen. Die Querwelle setzt sich demnach aus einzelnen Abschnitten zusammen, von denen jeweils einer mit einem Winkelgetriebe direkt verbunden ist, wobei die Abschnitte zwischen den Winkelgetrieben untereinander durch die Gelenkwelle verbunden sind. Die Gelenkwelle kann teleskopierbar oder nicht längenveränderlich sein.

Um den Antrieb der Arbeitsorgane zur Aufnahme und/oder Bearbeitung von Erntegut abschalten zu können, beispielsweise während einer Straßenfahrt, bietet es sich an, zwischen der Querwelle und der Riemenscheibe eine dritte Kupptung anzubringen. Die dritte Kupplung kann sich auf der den Winkelgetrieben zugewandten Seite der Riemenscheibe zwischen der Riemenscheibe und der Querwelle befinden, oder ein Abschnitt der Querwelle erstreckt sich durch eine mit der Riemenscheibe verbundene Hohlwelle hindurch bis zur dritten Kupplung, die sich demnach auf der von den Winkelgetrieben abgewandten Seite der Riemenscheibe befindet. Die Hohlwelle treibt dann von der Kupplung aus die Riemenscheibe und vorzugsweise auch den Antriebsstrang einer Hydropumpe zum Antrieb eines Einzugsförderers und/oder Erntevorsatzes der Erntemaschine an.

### Ausführungsbeispiel

Anhand der Abbildungen werden zwei Ausführungsbeispiele der Erfindung erläutert. Es zeigen:
- Fig. 1: eine schematische seitliche Ansicht einer selbstfahrenden Erntemaschine in Form eines Feldhäckslers,
- Fig. 2: eine schematische Draufsicht auf eine erste Ausführungsform der Antriebsanordnung der Erntemaschine, und
- Fig. 3: eine schematische Draufsicht auf eine zweite Ausführungsform der Antriebsanordnung der Erntemaschine.

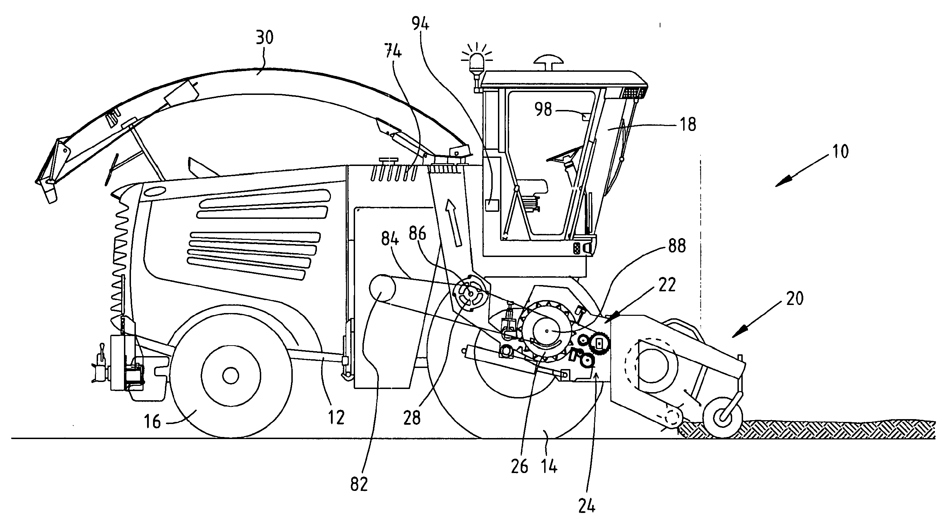

In der Figur 1 ist eine Erntemaschine 10 in der Art eines selbstfahrenden Feldhäckslers in schematischer Seitenansicht dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 in Form eines Aufnehmers einsehbar ist. Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseltrommel 26 zugeführt, die es in kleine Stücke häckselt und es einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Austragschacht 30. Im Folgenden beziehen sich Richtungsangaben, wie seitlich, unten und oben, auf die Vorwärtsbewegungsrichtung V der Erntemaschine 10, die in der Figur 1 nach rechts verläuft.

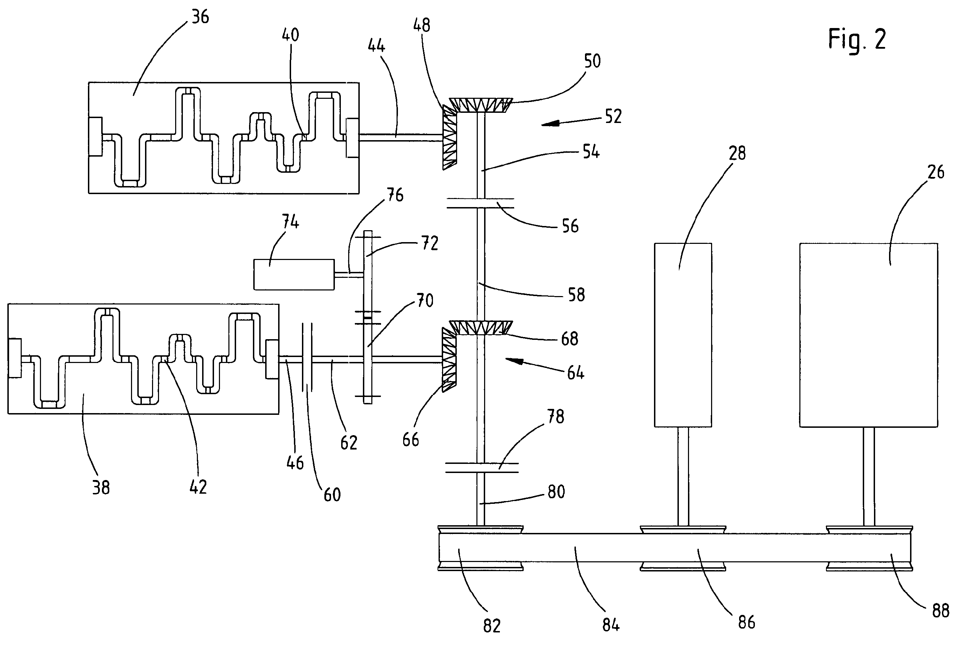

Die Figur 2 zeigt eine Draufsicht auf die Antriebsanordnung der Erntemaschine 10. Im rückwärtigen Bereich der Erntemaschine 10 befinden sich zwei rückwärtig der Hinterachse angeordnete (erste und zweite) Verbrennungsmotoren 36, 38 insbesondere in Form von Dieselmotoren, die seitlich nebeneinander angeordnet und mit Längsträgern und/oder Querträgern des Rahmens 12 verbunden sind und sich jeweils separat auf dem Rahmen 12 abstützen, oder auf einem Hilfsrahmen montiert sind, der wiederum am Rahmen 12 befestigt ist. Zwischen den Verbrennungsmotoren 36, 38 und dem Rahmen 12 bzw. dem Hilfsrahmen können jeweils schwingungsdämpfende Gummi-Metall-Elemente angeordnet sein. Die Leistungen der Verbrennungsmotoren 36, 38 sind vorzugsweise identisch, obwohl auch Verbrennungsmotoren 36, 38 unterschiedlicher Leistung verwendbar wären. Die Verbrennungsmotoren 36, 38 erstrecken sich in der Vorwärtsrichtung der Erntemaschine 10 bis etwa zum rückwärtigen Ende des Rahmens 12 und umfassen (erste und zweite) Kurbelwellen 40, 42, die sich nach vorn aus den Gehäusen der Verbrennungsmotoren 36, 38 heraus erstrecken. Die Kurbelwellen 40, 42 treiben jeweils eine sich horizontal und nach vorn erstreckende (erste und zweite) Längswelle 44, 46 an.

Die erste Längswelle 44 ist an ihrem vorderen Ende mit einem ersten Winkelgetriebe 52 verbunden, das sich aus einem ersten Kegelzahnrad 48, welches direkt mit der ersten Längswelle 44 verbunden ist, und aus einem zweiten Kegelzahnrad 50 zusammensetzt, das mit dem ersten Kegelzahnrad 48 kämmt. Die Drehachse des zweiten Kegelzahnrads 50 erstreckt sich horizontal und quer zur Vorwärtsrichtung. Das zweite Kegelzahnrad 50 ist mit einem Abschnitt 54 einer ersten Querwelle 54, 58, 80 verbunden, der wiederum mit einer ersten Kupplung 56 verbunden ist, welche ausgangsseitig mit einer zweiten Abschnitt 58 der Querwelle 54, 58, 80 gekoppelt ist.

Die zweite Längswelle 46 ist an ihrem vorderen Ende mit einer zweiten Kupplung 60 verbunden, die ausgangsseitig mit einer dritten Längswelle 62 gekoppelt ist, die sich koaxial zur Längswelle 46 erstreckt. Die Längswelle 62 ist an ihrem vorderen Ende mit einem zweiten Winkelgetriebe 64 verbunden, das sich aus einem ersten Kegelzahnrad 66, welches direkt mit der dritten Längswelle 62 verbunden ist, und aus einem zweiten Kegelzahnrad 68 zusammensetzt, das mit dem ersten Kegelzahnrad 66 kämmt. Die Drehachse des zweiten Kegelzahnrads 68 erstreckt sich horizontal und quer zur Vorwärtsrichtung und das zweite Kegelzahnrad 68 ist starr mit dem zweiten Abschnitt 58 der Querwelle 54, 58, 80 gekoppelt.

Die dritte Längswelle 62 trägt zwischen der zweiten Kupplung 60 und dem ersten Kegelzahnrad 66 des zweiten Winkelgetriebes 64 noch ein am Umfang verzahntes Zahnrad 70, das mit einem weiteren Zahnrad 72 kämmt, welches über eine fünfte Längswelle 76 ein Pumpenaggregat 74 antreibt, das eine Hydropumpe zum Antrieb von Hydromotoren für den Vortrieb der Erntemaschine, eine Lenkpumpe, eine Hydropumpe zum Antrieb von Hydromotoren für den Erntevorsatz 22 und eine Hydropumpe zur Ölversorgung der Steuerung des hydrostatischen Antriebs für den Vortrieb der Erntemaschine 10 umfasst.

Der zweite Abschnitt 58 der Querwelle 54, 58, 80 ist an ihrem von der ersten Kupplung 56 beabstandeten Ende mit einer dritten Kupplung 78 verbunden, die ausgangsseitig über einen dritten Abschnitt 80 der Querwelle 54, 58, 80 eine Riemenscheibe 82 antreibt. Die Riemenscheibe 82 wird von einem Treibriemen 84 umschlungen, der auch eine Riemenscheibe 86 für den Antrieb der Fördereinrichtung 28 und eine Riemenscheibe 88 zum Antrieb der Häckseltrommel 26 umschlingt. Anstelle der oder zusätzlich zur dritten Kupplung 78 kann der Antriebsstrang der Häckseltrommel 26 und der Fördervorrichtung 28 durch einen Mechanismus zum Spannen und Lösen des Treibriemens 84 in Bewegung versetzt oder angehalten werden.

Die Winkelgetriebe 52, 64 realisieren nach alledem ein einfach aufgebautes und effizientes Verbindungsgetriebe, über das die Verbrennungsmotoren 36 und/oder 38 die Riemenscheibe 82 antreiben können. Anstelle der Kegelzahnräder 48, 50, 66, 68 könnten auch Schneckenräder und damit kämmende Zahnräder verwendet werden, was auch für die zweite Ausführungsform gilt.

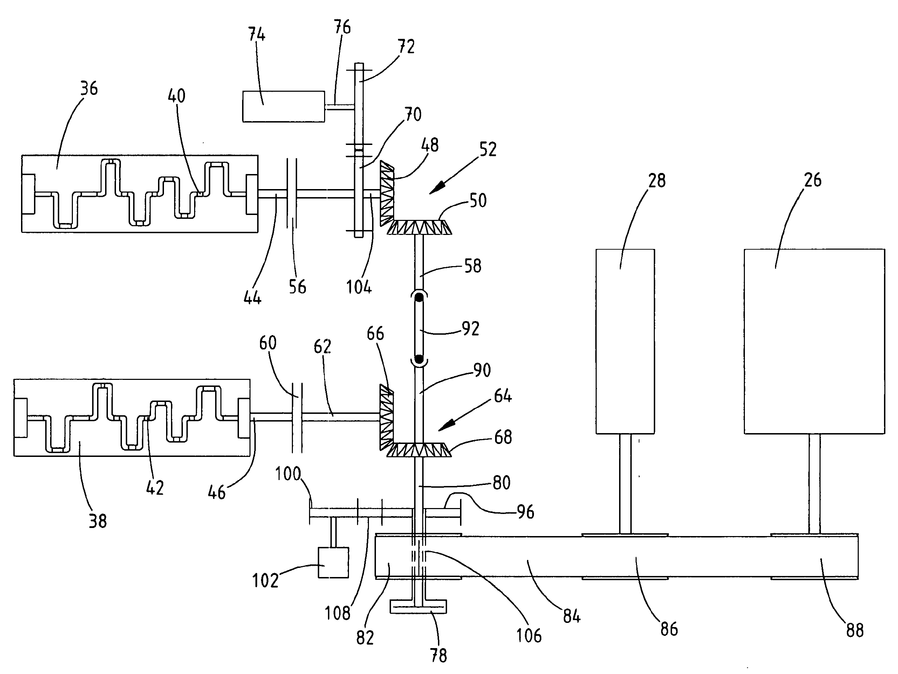

Bei der in der Figur 3 dargestellten, zweiten Ausführungsform des Antriebsstrangs der Erntemaschine 10 sind mit der ersten Ausführungsform übereinstimmende Elemente mit denselben Bezugszeichen gekennzeichnet. Bei dieser zweiten Ausführungsform sind die Verbrennungsmotoren 36, 38 in Vorwärtsrichtung miteinander ausgerichtet, was selbstverständlich auch bei der ersten Ausführungsform möglich wäre. Der erste Verbrennungsmotor 36 treibt im Betrieb mit seiner Kurbelwelle 40 die erste Längswelle 44 an, die mit der Eingangsseite der ersten Kupplung 56 verbunden ist. Die Ausgangsseite der ersten Kupplung 56 ist über eine vierte Längswelle 104 mit dem ersten Kegelzahnrad 48 des ersten Winkelgetriebes 52 verbunden. Die vierte Längswelle 104 treibt auch über die Zahnräder 70, 72 und die fünfte Längswelle 76 das Pumpenaggregat 74 an. Es wäre auch denkbar, über eines der Zahnräder 70, 72 oder ein dazwischen angeordnetes Zahnrad (nicht gezeigt) weitere permanent angetriebene Elemente, wie einen elektrischen Generator und/oder einen Gebläseantrieb für die Kühlluftzufuhr für die Verbrennungsmotoren 36, 38 anzutreiben.

Das zweite Kegelzahnrad 50 des ersten Winkelgetriebes 52 ist mit einem ersten Abschnitt 58 der Querwelle 58, 80, 90 verbunden, der wiederum über eine Gelenkwelle 92 mit einem zweiten Abschnitt 90 der Querwelle 58, 80, 90 verbunden ist, der sich bis zum zweiten Kegelzahnrad 68 des zweiten Winkelgetriebes 64 erstreckt. Der zweite Verbrennungsmotor 38 treibt im Betrieb mit seiner Kurbelwelle 42 die zweite Längswelle 46 an, die mit der Eingangsseite der zweiten Kupplung 60 verbunden ist. Die Ausgangsseite der zweiten Kupplung 60 ist über die dritte Längswelle 62 mit dem ersten Kegelzahnrad 66 des zweiten Winkelgetriebes 64 verbunden.

Die Verbrennungsmotoren 36, 38 sind getrennt voneinander am Rahmen 12 oder einem Hilfsrahmen befestigt, in der Regel über Dämpfungselemente. An ihren Gehäusen sind auch die zugehörigen Kupplungen 56 bzw. 60 und Winkelgetriebe 52, 64 befestigt. Die Gelenkwelle 92 ermöglicht den Ausgleich von möglichen Toleranzen der Positionen der Verbrennungsmotoren 36, 38 und der Winkelgetriebe 52, 64.

Der zweite Abschnitt 90 der Querwelle 58, 80, 90 und das zweite Kegelzahnrad 68 des zweiten Winkelgetriebes 64 sind mit einem äußeren Abschnitt 80 der Querwelle 58, 80, 90 verbunden, der sich durch eine mit der Riemenscheibe 82 verbundene Hohlwelle 106 hindurch auf die von den Winkelgetrieben 52, 64 abgewandte Seite der Riemenscheibe 82 erstreckt und dort mit einer dritten Kupplung 78 verbunden ist. Die dritte Kupplung 78 ist ausgangsseitig mit der Hohlwelle 106 verbunden, die außerdem auf der den Winkelgetrieben 52, 64 zugewandten Seite der Riemenscheibe 82 über Zahnräder 96, 108 und 100 eine Hydropumpe 102 antreibt, die zum Antrieb eines Hydromotors (nicht gezeigt) zum Antrieb des Einzugsförderers 22 dient. Die dritte Kupplung 78 ermöglicht es, den Treibriemen 84 und mit ihm die Häckseltrommel 26 und die Fördervorrichtung 28 ein- und auszuschalten. Die Zahnräder 96, 108 und 100 können innerhalb eines Gehäuses angebracht werden, das am Gehäuse des zweiten Winkelgetriebes 64 befestigt ist. Die Zahnräder 70 und 72 sind hingegen vorzugsweise innerhalb des Gehäuses des ersten Winkelgetriebes 52 und der ersten Kupplung 56 integriert.

Eine geeignete Steuerung 94 (s. Figur 1) dient bei beiden Ausführungsformen zum Zuschalten und Abtrennen der Verbrennungsmotoren 36, 38 vom Antriebsstrang. Die Steuerung 94 ist mit den Kupplungen 56, 60 und 78 und mit Motorsteuerungen (nicht gezeigt) der Verbrennungsmotoren 36 und 38 verbunden. Es sind neben dem Stillstand der Verbrennungsmotoren 36, 38 drei Betriebsarten möglich. Bei größeren Leistungsanforderungen, beispielsweise bei der Maisernte mit einem anstelle des Aufnehmers 20 montierten Mähvorsatz (nicht gezeigt), laufen beide Verbrennungsmotoren 36, 38, und die Kupplungen 56 und 60 sind geschlossen. Die dritte Kupplung 78 dient in an sich bekannter Weise dazu, die Fördereinrichtung 28 und die Häckseltrommel 26 bei Bedarf ein- und auszuschalten, wozu eine geeignete Schnittstelle 98 (z. B. Schalter) mit der Steuerung 94 verbunden ist. Bei geringeren Leistungsanforderungen, z. B. bei der Ernte eines Schwads mittels des in Figur 1 dargestellten Aufnehmers 20 oder bei einer Straßenfahrt oder wenn bei der Maisernte nur einzelne Reihen am Feldrand zu ernten sind, wird nur einer der Verbrennungsmotoren 36 oder 38 benötigt, während der jeweils andere Verbrennungsmotor 38 oder 36 in den Stillstand versetzt wird. Die dem jeweils nicht benötigten Verbrennungsmotor 38 oder 36 zugeordnete Kupplung 60 oder 56 wird dann geöffnet, während die andere Kupplung 56 oder 60 geschlossen ist und auch das Pumpenaggregat 74 antreibt. Wenn später wieder beide Verbrennungsmotoren 36 und 38 benötigt werden, wird der stehende Verbrennungsmotor 38 oder 36 angelassen, auf die Drehzahl des laufenden Verbrennungsmotors 36 oder 38 gebracht und die zugehörige Kupplung 60 oder 56 geschlossen. Es wäre auch möglich, zum Anlassen des stehenden Verbrennungsmotors 38 oder 36 die zugehörige Kupplung 60 oder 56 zu schließen und ihn damit zu starten.

Das Zuschalten oder Abschalten eines Verbrennungsmotors 36 oder 38 zum oder vom Antriebsstrang kann durch eine Bedienereingabe mittels der Schnittstelle 98 oder selbsttätig durch die Steuerung 94 erfolgen, z. B. auf einer Lasterfassung der Verbrennungsmotoren 36 und/oder 38 (beispielsweise anhand seiner Drehzahl) oder auf einem Drehmomentsensor im Antriebsstrang basierend. Es wäre auch denkbar, durch die Steuerung 94 einen der Verbrennungsmotoren 36, 38 selbsttätig abzuschalten, wenn sich ein Straßen/Feldbetriebsschalter der Schnittstelle 98 in der Straßenbetriebsstellung befindet, und ihn selbsttätig zuzuschalten, wenn sich der Straßen/Feldbetriebsschalter in der Feldbetriebsstellung befindet und eine selbsttätige Erntevorsatzerkennung (s. EP 0 377 163 A oder DE 199 49 994 A) signalisiert, dass ein Maiserntevorsatz montiert ist, während einer der Verbrennungsmotoren 36, 38 bei Erkennung eines Erntevorsatzes 20 in Form eines Aufnehmers (wie in der Figur 1 gezeigt) stets ausgeschaltet bleibt. Die Steuerung 94 verwendet im Einmotorenbetrieb beide Verbrennungsmotoren 36, 38 wechselweise, um ihre Abnutzung etwa gleich zu halten.

Die Erfindung betrifft eine selbstfahrende landwirtschaftliche Erntemaschine, umfassend:
einen sich in einer Vorwärtsfahrtrichtung erstreckenden Rahmen, der durch im Eingriff mit dem Erdboden befindliche Mittel abgestützt wird und durch die genannten Mittel in der Vorwärtsrichtung bewegbar ist,
Arbeitsorgane zur Aufnahme und/oder Bearbeitung von Erntegut, die über einen Treibriemen antreibbar sind, der durch eine Riemenscheibe mit horizontal und quer zur Vorwärtsrichtung orientierter Drehachse antreibbar ist,
einen am Rahmen abgestützten ersten Verbrennungsmotor mit einer ersten Kurbelwelle,
einen am Rahmen abgestützten zweiten Verbrennungsmotor mit einer zweiten Kurbelwelle,
und ein in Vorwärtsrichtung vor den Verbrennungsmotoren angeordnetes Verbindungsgetriebe, das mit der ersten Kurbelwelle, der zweiten Kurbelwelle und der Riemenscheibe antriebsverbunden oder -bindbar ist,
wobei die beiden Verbrennungsmotoren bezüglich der Vorwärtsrichtung seitlich nebeneinander angeordnet sind und die Kurbelwellen sich in der Vorwärtsrichtung erstrecken.

### Stand der Technik

Selbstfahrende landwirtschaftliche Erntemaschinen werden in der jüngeren Vergangenheit mit immer leistungsstärkeren Verbrennungsmotoren ausgestattet, die bei Feldhäckslern derzeit bis über 800 kW abgeben können. Wegen der relativ geringen Stückzahlen, in denen derart leistungsstarke Motoren gefertigt werden, sind diese Motoren relativ preisaufwändig und in der Regel teurer als zwei Verbrennungsmotoren mit jeweils der halben Leistung. Weiterhin wird die gesamte Leistung des Motors nicht immer benötigt, - so ist sie beispielsweise beim Transport auf einer Straße oder bei der Grasernte nicht erforderlich - was zu einem schlechteren Wirkungsgrad des Motors als im Volllastbetrieb führt, weshalb vorgeschlagen wurde (EP 1 640 201 A1), eine selbstfahrende Erntemaschine mit zwei Verbrennungsmotoren auszustatten, von denen einer zur Bewältigung größerer Leistungsanforderungen dem anderen Verbrennungsmotor zuschaltbar ist.

Gemäß der EP 1 640 201 A1 sind die Kurbelwellen der beiden Verbrennungsmotoren quer zur Vorwärtsrichtung und horizontal orientiert, wobei ein Verbrennungsmotor in Vorwärtsrichtung vor dem anderen Verbrennungsmotor positioniert ist. Ein Stirnradgetriebe stellt eine Verbindung zwischen den Kurbelwellen beider Verbrennungsmotoren und dem Hauptantriebsstrang der Erntemaschine her. Zwischen einem der Verbrennungsmotoren und dem Stirnradgetriebe ist eine abschaltbare Kupplung angeordnet, um die Erntemaschine auch nur mit einem einzigen Verbrennungsmotor antreiben zu können, ohne den anderen Verbrennungsmotor mitlaufen lassen zu müssen. Beide Verbrennungsmotoren sind mit dem Stirnradgetriebe an einem Hilfsrahmen montiert, so dass sie eine kompakte, vormontagefähige Baugruppe bilden.

Ein anderer Feldhäcksler mit zwei Verbrennungsmotoren wird in der EP 1 813 459 A1 beschrieben. Die Verbrennungsmotoren sind quer zur Vorwärtsrichtung und hintereinander angeordnet. Ein Riemengetriebe verbindet die Kurbelwelle des rückwärtigen Verbrennungsmotors mit der Kurbelwelle des vorderen Verbrennungsmotors, die wiederum einen Triebriemen antreibt, der mit den größten Leistungsverbrauchern (Häckseltrommel und Gebläse) in Antriebsverbindung steht.

Die als gattungsbildend angesehene DE 10 2007 019 661 A1 beschreibt einen landwirtschaftlichen Feldhäcksler mit zwei seitlich nebeneinander angeordneten, sich in Fahrtrichtung erstreckenden Verbrennungsmotoren, deren Kurbelwellen über Gelenkwellen und ein Stirnradgetriebe mit einem Winkelgetriebe verbunden sind, das über eine quer liegende Welle eine Riemenscheibe antreibt, die über einen Hauptantriebsriemen die Häckseltrommel antreibt.

Die DE 37 22 367 A beschreibt einen landwirtschaftlichen Feldhäcksler mit einem einzigen, über der Hinterachse angeordneten Verbrennungsmotor, dessen Kurbelwelle sich in Fahrtrichtung nach vorn erstreckt und über eine Gelenkwelle mit einem Kegelrad-Verteilergetriebe verbunden ist, das eine sich quer zur Vorwärtsrichtung erstreckende Abtriebswelle antreibt, welche wiederum über einen Riementrieb eine Häckseltrommel in Drehung versetzt. Das Kegelrad-Verteilergetriebe treibt weiterhin die Vorderräder des Feldhäckslers mechanisch an, und von der mit der Gelenkwelle verbundenen Eingangswelle des Kegelrad-Verteilergetriebes wird der Antrieb für den Erntevorsatz und die Vorpresswalzen abgeleitet.

Die GB 667 949 A beschreibt ein Fahrzeug mit zwei Verbrennungsmotoren, die an jeweils einer Seite des Fahrzeugs unmittelbar vor einem Hinterrad oder hinter einem Vorderrad angeordnet sind. Bei einer Ausführungsform sind die Motoren rückwärtig des Vorderrads angeordnet und über jeweils eine sich in Fahrtrichtung erstreckende Welle mit je einem Winkelgetriebe verbunden. Die Winkelgetriebe treiben über ein weiteres, mittig zwischen den Winkelgetrieben angeordnetes Getriebe, ein Schaltgetriebe und ein Differenzialgetriebe die Hinterräder an.

In der nachveröffentlichten DE 10 2008 009 447 A1 wird eine selbstfahrende landwirtschaftliche Erntemaschine mit zwei in Fahrtrichtung angeordneten Verbrennungsmotoren beschrieben, die jeweils über Winkelgetriebe mit Kegelzahnrädern und eine Querwelle eine Riemenscheibe antreiben, welche mittels eines Riemens mit der Häckseltrommel in Antriebsverbindung steht.

Bei Antriebsanordnungen mit quer angeordneten Verbrennungsmotoren, wie sie in der EP 1 640 201 A und EP 1 813 459 A beschrieben werden, ist als nachteilig anzusehen, dass die mögliche Breite der Erntemaschine nur eine begrenzte Längsabmessung der Motoren zulässt und damit auch die maximale Leistung einschränkt. Dieser Nachteil wird bei den längs eingebauten Motoren vermieden (DE 10 2007 019 661 A), bei denen allerdings die Ausgangswelle des die Leistung der Verbrennungsmotoren zusammenfassenden Stirnradgetriebes in Längsrichtung angeordnet ist, was sich insofern als nachteilig erweist, dass ein weiteres Winkelgetriebe erforderlich ist, um einen seitlichen Riemenantrieb zu den größten Verbrauchern anzutreiben, welches den baulichen Aufwand und die Zahl der im Antriebsstrang liegenden, den Wirkungsgrad nachteilig beeinflussenden Zahneingriffe vergrößert.

### Aufgabe der Erfindung

Die der Erfindung zu Grunde liegende Aufgabe wird darin gesehen, eine Antriebsanordnung für eine selbstfahrende Erntemaschine mit mehreren, längs eingebauten Verbrennungsmotoren bereitzustellen, die auf einfache und wirkungsgradgünstige Weise einen Antrieb eines quer liegenden Antriebsriemens für den Antrieb der größeren Verbraucher der Erntemaschine ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

### Lösung der Aufgabe

Eine selbstfahrende landwirtschaftliche Erntemaschine umfasst einen sich in einer Vorwärtsfahrtrichtung erstreckenden Rahmen, der durch im Eingriff mit dem Erdboden befindliche Mittel (in der Regel Räder oder Gummiraupenlaufwerke) abgestützt wird und durch die genannten Mittel in der Vorwärtsrichtung bewegbar ist. Die Erntemaschine weist weiterhin Arbeitsorgane zur Aufnahme und/oder Bearbeitung von Erntegut auf, die über einen Treibriemen antreibbar sind, der durch eine Riemenscheibe mit horizontal und quer zur Vorwärtsrichtung orientierter Drehachse antreibbar ist. Am Rahmen sind seitlich nebeneinander zwei Verbrennungsmotoren angebracht, deren Kurbelwellen sich in der Vorwärtsrichtung erstrecken. Ein Verbindungsgetriebe ist in Vorwärtsrichtung vor den Verbrennungsmotoren angeordnet und besteht aus zwei Winkelgetrieben, beispielsweise Kegelradgetrieben, die mit jeweils einer Kurbelwelle der Verbrennungsmotoren einerseits und einer quer angeordneten Querwelle andererseits verbunden sind, die wiederum mit der Riemenscheibe verbindbar oder verbunden ist. Die Riemenscheibe ist auf einer ersten Seite des zweiten Winkelgetriebes angeordnet, während sich das erste Winkelgetriebe auf der zweiten Seite des zweiten Winkelgetriebes befindet.

Auf diese Weise erreicht man einen einfachen und wirkungsgradeffizienten Aufbau des Verbindungsgetriebes, das jeweils nur zwei kämmende Zahnräder benötigt, um von den Verbrennungsmotoren her die Querwelle und mit ihr die Riemenscheibe anzutreiben.

Die Verbrennungsmotoren werden auf Grund ihrer relativ großen Masse unabhängig am Rahmen der Erntemaschine befestigt, in der Regel über schwingungsdämpfende Elemente. Die Winkelgetriebe und ggf. die zwischen den Verbrennungsmotoren und den Winkelgetrieben angeordneten Kupplungen können am zugehörigen Verbrennungsmotor befestigt werden. Um mögliche Toleranzen und Abweichungen der Einbaupositionen der Verbrennungsmotoren und der Winkelgetriebe auszugleichen und eine eventuelle, unerwünschte Übertragung von Schwingungen eines Verbrennungsmotors auf den anderen Verbrennungsmotor zu vermeiden, ist in die Querwelle zwischen den beiden Winkelgetrieben eine Gelenkwelle eingefügt. Die Querwelle setzt sich demnach aus einzelnen Abschnitten zusammen, von denen jeweils einer mit einem Winkelgetriebe direkt verbunden ist, wobei die Abschnitte zwischen den Winkelgetrieben untereinander durch die Gelenkwelle verbunden sind. Die Gelenkwelle kann teleskopierbar oder nicht längenveränderlich sein.

Bei einer bevorzugten Ausführungsform der Erfindung besteht die Möglichkeit, im Bedarfsfall (d. h. bei kleinem Antriebsleistungsbedarf, beispielsweise bei der Straßenfahrt oder Grasernte) nur einen der beiden Verbrennungsmotoren in Betrieb zu setzen und den anderen abzuschalten. Um den jeweils anderen Verbrennungsmotor nicht unnötig mitdrehen zu lassen, wird vorgeschlagen, zwischen der Kurbelwelle des ersten bzw. zweiten Verbrennungsmotors und der Querwelle eine Kupplung anzubringen, die ein Abtrennen des jeweils nicht benötigten Verbrennungsmotors vom Antriebsstrang erlaubt. Dabei ist bevorzugt, dass jeder der Verbrennungsmotoren abgeschaltet und vom Antriebsstrang getrennt werden kann, damit beide einem möglichst ähnlichen Verschleiß unterliegen. Die Kupplungen können sich an beliebiger geeigneter Stelle befinden, d. h. beim von der Riemenscheibe weiter beabstandeten, ersten Verbrennungsmotor an der Eingangsseite oder an der Ausgangsseite des Winkelgetriebes und beim der Riemenscheibe benachbarten Verbrennungsmotor an der Eingangsseite des Winkelgetriebes.

Die Querwelle kann neben dem Treibriemen auch ein Pumpenaggregat antreiben, das beispielsweise eine Hydropumpe zum Antrieb von Hydromotoren für den Vortrieb der Erntemaschine, eine Lenkpumpe, eine Hydropumpe zum Antrieb von Hydromotoren für einen Erntevorsatz oder eine Hydropumpe zur Ölversorgung der Steuerung des hydrostatischen Antriebs für den Vortrieb der Erntemaschine antreibt. Dieses Pumpenaggregat wird zweckmäßigerweise von der Ausgangsseite der erwähnten Kupplungen her angetrieben, beispielsweise von einer Welle her, die zwischen der ersten Kupplung des ersten Verbrennungsmotors und dem ersten Winkelgetriebe angeordnet ist, oder von Welle her, die zwischen der zweiten Kupplung des zweiten Verbrennungsmotors und dem zweiten Winkelgetriebe positioniert ist. Auch ein von der Querwelle her abgeleiteter Antrieb des Pumpenaggregats wäre denkbar.

Um den Antrieb der Arbeitsorgane zur Aufnahme und/oder Bearbeitung von Erntegut abschalten zu können, beispielsweise während einer Straßenfahrt, bietet es sich an, zwischen der Querwelle und der Riemenscheibe eine dritte Kupplung anzubringen. Die dritte Kupplung kann sich auf der den Winkelgetrieben zugewandten Seite der Riemenscheibe zwischen der Riemenscheibe und der Querwelle befinden, oder ein Abschnitt der Querwelle erstreckt sich durch eine mit der Riemenscheibe verbundene Hohlwelle hindurch bis zur dritten Kupplung, die sich demnach auf der von den Winkelgetrieben abgewandten Seite der Riemenscheibe befindet. Die Hohlwelle treibt dann von der Kupplung aus die Riemenscheibe und vorzugsweise auch den Antriebsstrang einer Hydropumpe zum Antrieb eines Einzugsförderers und/oder Erntevorsatzes der Erntemaschine an.

### Ausführungsbeispiel

Anhand der Abbildungen werden Ausführungsbeispiele erläutert, wobei die Ausführungsform nach Figur 2 wegen der fehlenden Gelenkwelle nicht unter den Umfang des Anspruchs 1 fällt. Es zeigen:
- Fig.: 1 eine schematische seitliche Ansicht einer selbstfahrenden Erntemaschine in Form eines Feldhäckslers,
- Fig. 2: eine schematische Draufsicht auf eine erste Ausführungsform der Antriebsanordnung der Erntemaschine, und
- Fig. 3: eine schematische Draufsicht auf eine zweite Ausführungsform der Antriebsanordnung der Erntemaschine.

In der Figur 1 ist eine Erntemaschine 10 in der Art eines selbstfahrenden Feldhäckslers in schematischer Seitenansicht dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 in Form eines Aufnehmers einsehbar ist. Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseltrommel 26 zugeführt, die es in kleine Stücke häckselt und es einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Austragschacht 30. Im Folgenden beziehen sich Richtungsangaben, wie seitlich, unten und oben, auf die Vorwärtsbewegungsrichtung V der Erntemaschine 10, die in der Figur 1 nach rechts verläuft.

Die Figur 2 zeigt eine Draufsicht auf die Antriebsanordnung der Erntemaschine 10. Im rückwärtigen Bereich der Erntemaschine 10 befinden sich zwei rückwärtig der Hinterachse angeordnete (erste und zweite) Verbrennungsmotoren 36, 38 insbesondere in Form von Dieselmotoren, die seitlich nebeneinander angeordnet und mit Längsträgern und/oder Querträgern des Rahmens 12 verbunden sind und sich jeweils separat auf dem Rahmen 12 abstützen, oder auf einem Hilfsrahmen montiert sind, der wiederum am Rahmen 12 befestigt ist. Zwischen den Verbrennungsmotoren 36, 38 und dem Rahmen 12 bzw. dem Hilfsrahmen können jeweils schwingungsdämpfende Gummi-Metall-Elemente angeordnet sein. Die Leistungen der Verbrennungsmotoren 36, 38 sind vorzugsweise identisch, obwohl auch Verbrennungsmotoren 36, 38 unterschiedlicher Leistung verwendbar wären. Die Verbrennungsmotoren 36, 38 erstrecken sich in der Vorwärtsrichtung der Erntemaschine 10 bis etwa zum rückwärtigen Ende des Rahmens 12 und umfassen (erste und zweite) Kurbelwellen 40, 42, die sich nach vorn aus den Gehäusen der Verbrennungsmotoren 36, 38 heraus erstrecken. Die Kurbelwellen 40, 42 treiben jeweils eine sich horizontal und nach vorn erstreckende (erste und zweite) Längswelle 44, 46 an.

Die erste Längswelle 44 ist an ihrem vorderen Ende mit einem ersten Winkelgetriebe 52 verbunden, das sich aus einem ersten Kegelzahnrad 48, welches direkt mit der ersten Längswelle 44 verbunden ist, und aus einem zweiten Kegelzahnrad 50 zusammensetzt, das mit dem ersten Kegelzahnrad 48 kämmt. Die Drehachse des zweiten Kegelzahnrads 50 erstreckt sich horizontal und quer zur Vorwärtsrichtung. Das zweite Kegelzahnrad 50 ist mit einem Abschnitt 54 einer ersten Querwelle 54, 58, 80 verbunden, der wiederum mit einer ersten Kupplung 56 verbunden ist, welche ausgangsseitig mit einer zweiten Abschnitt 58 der Querwelle 54, 58, 80 gekoppelt ist.

Die zweite Längswelle 46 ist an ihrem vorderen Ende mit einer zweiten Kupplung 60 verbunden, die ausgangsseitig mit einer dritten Längswelle 62 gekoppelt ist, die sich koaxial zur Längswelle 46 erstreckt. Die Längswelle 62 ist an ihrem vorderen Ende mit einem zweiten Winkelgetriebe 64 verbunden, das sich aus einem ersten Kegelzahnrad 66, welches direkt mit der dritten Längswelle 62 verbunden ist, und aus einem zweiten Kegelzahnrad 68 zusammensetzt, das mit dem ersten Kegelzahnrad 66 kämmt. Die Drehachse des zweiten Kegelzahnrads 68 erstreckt sich horizontal und quer zur Vorwärtsrichtung und das zweite Kegelzahnrad 68 ist starr mit dem zweiten Abschnitt 58 der Querwelle 54, 58, 80 gekoppelt.

Die dritte Längswelle 62 trägt zwischen der zweiten Kupplung 60 und dem ersten Kegelzahnrad 66 des zweiten Winkelgetriebes 64 noch ein am Umfang verzahntes Zahnrad 70, das mit einem weiteren Zahnrad 72 kämmt, welches über eine fünfte Längswelle 76 ein Pumpenaggregat 74 antreibt, das eine Hydropumpe zum Antrieb von Hydromotoren für den Vortrieb der Erntemaschine, eine Lenkpumpe, eine Hydropumpe zum Antrieb von Hydromotoren für den Erntevorsatz 22 und eine Hydropumpe zur Ölversorgung der Steuerung des hydrostatischen Antriebs für den Vortrieb der Erntemaschine 10 umfasst.

Der zweite Abschnitt 58 der Querwelle 54, 58, 80 ist an ihrem von der ersten Kupplung 56 beabstandeten Ende mit einer dritten Kupplung 78 verbunden, die ausgangsseitig über einen dritten Abschnitt 80 der Querwelle 54, 58, 80 eine Riemenscheibe 82 antreibt. Die Riemenscheibe 82 wird von einem Treibriemen 84 umschlungen, der auch eine Riemenscheibe 86 für den Antrieb der Fördereinrichtung 28 und eine Riemenscheibe 88 zum Antrieb der Häckseltrommel 26 umschlingt. Anstelle der oder zusätzlich zur dritten Kupplung 78 kann der Antriebsstrang der Häckseltrommel 26 und der Fördervorrichtung 28 durch einen Mechanismus zum Spannen und Lösen des Treibriemens 84 in Bewegung versetzt oder angehalten werden.

Die Winkelgetriebe 52, 64 realisieren nach alledem ein einfach aufgebautes und effizientes Verbindungsgetriebe, über das die Verbrennungsmotoren 36 und/oder 38 die Riemenscheibe 82 antreiben können. Anstelle der Kegelzahnräder 48, 50, 66, 68 könnten auch Schneckenräder und damit kämmende Zahnräder verwendet werden, was auch für die zweite Ausführungsform gilt.

Bei der in der Figur 3 dargestellten, zweiten Ausführungsform des Antriebsstrangs der Erntemaschine 10 sind mit der ersten Ausführungsform übereinstimmende Elemente mit denselben Bezugszeichen gekennzeichnet. Bei dieser zweiten Ausführungsform sind die Verbrennungsmotoren 36, 38 in Vorwärtsrichtung miteinander ausgerichtet, was selbstverständlich auch bei der ersten Ausführungsform möglich wäre. Der erste Verbrennungsmotor 36 treibt im Betrieb mit seiner Kurbelwelle 40 die erste Längswelle 44 an, die mit der Eingangsseite der ersten Kupplung 56 verbunden ist. Die Ausgangsseite der ersten Kupplung 56 ist über eine vierte Längswelle 104 mit dem ersten Kegelzahnrad 48 des ersten Winkelgetriebes 52 verbunden. Die vierte Längswelle 104 treibt auch über die Zahnräder 70, 72 und die fünfte Längswelle 76 das Pumpenaggregat 74 an. Es wäre auch denkbar, über eines der Zahnräder 70, 72 oder ein dazwischen angeordnetes Zahnrad (nicht gezeigt) weitere permanent angetriebene Elemente, wie einen elektrischen Generator und/oder einen Gebläseantrieb für die Kühlluftzufuhr für die Verbrennungsmotoren 36, 38 anzutreiben.

Das zweite Kegelzahnrad 50 des ersten Winkelgetriebes 52 ist mit einem ersten Abschnitt 58 der Querwelle 58, 80, 90 verbunden, der wiederum über eine Gelenkwelle 92 mit einem zweiten Abschnitt 90 der Querwelle 58, 80, 90 verbunden ist, der sich bis zum zweiten Kegelzahnrad 68 des zweiten Winkelgetriebes 64 erstreckt. Der zweite Verbrennungsmotor 38 treibt im Betrieb mit seiner Kurbelwelle 42 die zweite Längswelle 46 an, die mit der Eingangsseite der zweiten Kupplung 60 verbunden ist. Die Ausgangsseite der zweiten Kupplung 60 ist über die dritte Längswelle 62 mit dem ersten Kegelzahnrad 66 des zweiten Winkelgetriebes 64 verbunden.

Die Verbrennungsmotoren 36, 38 sind getrennt voneinander am Rahmen 12 oder einem Hilfsrahmen befestigt, in der Regel über Dämpfungselemente. An ihren Gehäusen sind auch die zugehörigen Kupplungen 56 bzw. 60 und Winkelgetriebe 52, 64 befestigt. Die Gelenkwelle 92 ermöglicht den Ausgleich von möglichen Toleranzen der Positionen der Verbrennungsmotoren 36, 38 und der Winkelgetriebe 52, 64.

Der zweite Abschnitt 90 der Querwelle 58, 80, 90 und das zweite Kegelzahnrad 68 des zweiten Winkelgetriebes 64 sind mit einem äußeren Abschnitt 80 der Querwelle 58, 80, 90 verbunden, der sich durch eine mit der Riemenscheibe 82 verbundene Hohlwelle 106 hindurch auf die von den Winkelgetrieben 52, 64 abgewandte Seite der Riemenscheibe 82 erstreckt und dort mit einer dritten Kupplung 78 verbunden ist. Die dritte Kupplung 78 ist ausgangsseitig mit der Hohlwelle 106 verbunden, die außerdem auf der den Winkelgetrieben 52, 64 zugewandten Seite der Riemenscheibe 82 über Zahnräder 96, 108 und 100 eine Hydropumpe 102 antreibt, die zum Antrieb eines Hydromotors (nicht gezeigt) zum Antrieb des Einzugsförderers 22 dient. Die dritte Kupplung 78 ermöglicht es, den Treibriemen 84 und mit ihm die Häckseltrommel 26 und die Fördervorrichtung 28 ein- und auszuschalten. Die Zahnräder 96, 108 und 100 können innerhalb eines Gehäuses angebracht werden, das am Gehäuse des zweiten Winkelgetriebes 64 befestigt ist. Die Zahnräder 70 und 72 sind hingegen vorzugsweise innerhalb des Gehäuses des ersten Winkelgetriebes 52 und der ersten Kupplung 56 integriert.

Eine geeignete Steuerung 94 (s. Figur 1) dient bei beiden Ausführungsformen zum Zuschalten und Abtrennen der Verbrennungsmotoren 36, 38 vom Antriebsstrang. Die Steuerung 94 ist mit den Kupplungen 56, 60 und 78 und mit Motorsteuerungen (nicht gezeigt) der Verbrennungsmotoren 36 und 38 verbunden. Es sind neben dem Stillstand der Verbrennungsmotoren 36, 38 drei Betriebsarten möglich. Bei größeren Leistungsanforderungen, beispielsweise bei der Maisernte mit einem anstelle des Aufnehmers 20 montierten Mähvorsatz (nicht gezeigt), laufen beide Verbrennungsmotoren 36, 38, und die Kupplungen 56 und 60 sind geschlossen. Die dritte Kupplung 78 dient in an sich bekannter Weise dazu, die Fördereinrichtung 28 und die Häckseltrommel 26 bei Bedarf ein- und auszuschalten, wozu eine geeignete Schnittstelle 98 (z. B. Schalter) mit der Steuerung 94 verbunden ist. Bei geringeren Leistungsanforderungen, z. B. bei der Ernte eines Schwads mittels des in Figur 1 dargestellten Aufnehmers 20 oder bei einer Straßenfahrt oder wenn bei der Maisernte nur einzelne Reihen am Feldrand zu ernten sind, wird nur einer der Verbrennungsmotoren 36 oder 38 benötigt, während der jeweils andere Verbrennungsmotor 38 oder 36 in den Stillstand versetzt wird. Die dem jeweils nicht benötigten Verbrennungsmotor 38 oder 36 zugeordnete Kupplung 60 oder 56 wird dann geöffnet, während die andere Kupplung 56 oder 60 geschlossen ist und auch das Pumpenaggregat 74 antreibt. Wenn später wieder beide Verbrennungsmotoren 36 und 38 benötigt werden, wird der stehende Verbrennungsmotor 38 oder 36 angelassen, auf die Drehzahl des laufenden Verbrennungsmotors 36 oder 38 gebracht und die zugehörige Kupplung 60 oder 56 geschlossen. Es wäre auch möglich, zum Anlassen des stehenden Verbrennungsmotors 38 oder 36 die zugehörige Kupplung 60 oder 56 zu schließen und ihn damit zu starten.

Das Zuschalten oder Abschalten eines Verbrennungsmotors 36 oder 38 zum oder vom Antriebsstrang kann durch eine Bedienereingabe mittels der Schnittstelle 98 oder selbsttätig durch die Steuerung 94 erfolgen, z. B. auf einer Lasterfassung der Verbrennungsmotoren 36 und/oder 38 (beispielsweise anhand seiner Drehzahl) oder auf einem Drehmomentsensor im Antriebsstrang basierend. Es wäre auch denkbar, durch die Steuerung 94 einen der Verbrennungsmotoren 36, 38 selbsttätig abzuschalten, wenn sich ein Straßen/Feldbetriebsschalter der Schnittstelle 98 in der Straßenbetriebsstellung befindet, und ihn selbsttätig zuzuschalten, wenn sich der Straßen/Feldbetriebsschalter in der Feldbetriebsstellung befindet und eine selbsttätige Erntevorsatzerkennung (s. EP 0 377 163 A oder DE 199 49 994 A) signalisiert, dass ein Maiserntevorsatz montiert ist, während einer der Verbrennungsmotoren 36, 38 bei Erkennung eines Erntevorsatzes 20 in Form eines Aufnehmers (wie in der Figur 1 gezeigt) stets ausgeschaltet bleibt. Die Steuerung 94 verwendet im Einmotorenbetrieb beide Verbrennungsmotoren 36, 38 wechselweise, um ihre Abnutzung etwa gleich zu halten.

## Patentansprüche (Patentansprüche für folgende(n) Vertragsstaat(en): AT, BE, BG, CH, CY, CZ, DK, EE, ES, FI, FR, GB, GR, HR, HU, IE, IS, IT, LI, LT, LU, LV, MC, MK, NL, NO, PL, PT, RO, SE, SI, SK, TR)

1. Selbstfahrende landwirtschaftliche Erntemaschine (10), umfassend:
einen sich in einer Vorwärtsfahrtrichtung erstreckenden Rahmen (12), der durch im Eingriff mit dem Erdboden befindliche Mittel (14, 16) abgestützt wird und durch die genannten Mittel (14, 16) in der Vorwärtsrichtung bewegbar ist,
Arbeitsorgane (26, 28) zur Aufnahme und/oder Bearbeitung von Erntegut, die über einen Treibriemen (84) antreibbar sind, der durch eine Riemenscheibe (82) mit horizontal und quer zur Vorwärtsrichtung orientierter Drehachse antreibbar ist,
einen am Rahmen (12) abgestützten ersten Verbrennungsmotor (36) mit einer ersten Kurbelwelle (40),
einen am Rahmen (12) abgestützten zweiten Verbrennungsmotor (38) mit einer zweiten Kurbelwelle (42),
und ein in Vorwärtsrichtung vor den Verbrennungsmotoren (36, 38) angeordnetes Verbindungsgetriebe, das mit der ersten Kurbelwelle (40), der zweiten Kurbelwelle (42) und der Riemenscheibe (82) antriebsverbunden oder -bindbar ist,
wobei die beiden Verbrennungsmotoren (36, 38) bezüglich der Vorwärtsrichtung seitlich nebeneinander angeordnet sind und die Kurbelwellen (40, 42) sich in der Vorwärtsrichtung erstrecken,
**dadurch gekennzeichnet, dass** das Verbindungsgetriebe ein erstes und ein zweites Winkelgetriebe (52, 64) umfasst, die jeweils mit einer der Kurbelwellen (40, 24) und mit einer quer angeordneten Querwelle (54, 58, 80, 90) antriebsverbindbar oder antriebsverbunden sind, dass die Querwelle (54, 58, 80, 90) mit der Riemenscheibe (82) verbindbar oder verbunden ist, und dass die Riemenscheibe (82) auf einer ersten Seite des zweiten Winkelgetriebes (64) angeordnet ist, während sich das erste Winkelgetriebe (52) auf einer zweiten Seite des zweiten Winkelgetriebes (64) befindet.

2. Erntemaschine (10) nach Anspruch 1, **dadurch gekennzeichnet, dass** eine erste Kupplung (56) zwischen der ersten Kurbelwelle (40) und der Querwelle (54, 58, 80, 90) angeordnet ist.

3. Erntemaschine (10) nach Anspruch 2, **dadurch gekennzeichnet, dass** die erste Kupplung (56) zwischen der ersten Kurbelwelle (40) und einem ersten Winkelgetriebe (52) angeordnet ist.

4. Erntemaschine (10) nach einem der Ansprüche 1 bis 3, **dadurch gekennzeichnet, dass** eine zweite Kupplung (60) zwischen der zweiten Kurbelwelle (42) und der Querwelle (54, 58, 80, 90) angeordnet ist.

5. Erntemaschine (10) nach Anspruch 4, **dadurch gekennzeichnet, dass** die zweite Kupplung (60) zwischen der zweiten Kurbelwelle (42) und einem zweiten Winkelgetriebe (64) angeordnet ist.

6. Erntemaschine (10) nach einem der Ansprüche 1 bis 5, **dadurch gekennzeichnet, dass** ein Pumpenaggregat (74) mit der Abtriebsseite der Kupplungen (56, 60) in Antriebsverbindung steht.

7. Erntemaschine (10) nach Anspruch 6, **dadurch gekennzeichnet, dass** das Pumpenaggregat (74) durch eine Antriebsverbindung antreibbar ist, die durch eine zwischen der ersten Kupplung (56) und dem ersten, von der Riemenscheibe beabstandeten Winkelgetriebe (52) angeordnete Welle (104) antreibbar ist.

8. Erntemaschine (10) nach einem der vorhergehenden Ansprüche, **dadurch gekennzeichnet, dass** die Verbrennungsmotoren (36, 38) unabhängig voneinander am Rahmen (12) der Erntemaschine befestigt sind.

9. Erntemaschine (10) nach einem der vorhergehenden Ansprüche, **dadurch gekennzeichnet, dass** die Winkelgetriebe (52, 64) jeweils am Verbrennungsmotor (36, 38) befestigt sind.

10. Erntemaschine (10) nach einem der vorhergehenden Ansprüche, **dadurch gekennzeichnet, dass** die Querwelle (58, 80, 90) sich zwischen den Winkelgetrieben (52, 64) aus mehreren, getrennten Abschnitten (58, 80, 90) zusammensetzt und dass zwischen die jeweils mit einem Winkelgetriebe (52, 64) verbundenen Abschnitte (58, 90) der Querwelle (58, 80, 90) eine Gelenkwelle (92) eingefügt ist.

11. Erntemaschine (10) nach einem der vorhergehenden Ansprüche, **dadurch gekennzeichnet, dass** zwischen der Querwelle (54, 58, 80, 90) und der Riemenscheibe (82) eine dritte Kupplung (78) eingefügt ist.

12. Erntemaschine (10) nach Anspruch 11, **dadurch gekennzeichnet, dass** eine Hydropumpe (102) zum Antrieb eines Einzugsförderers (22) und/oder Erntevorsatzes (20) mit der Ausgangsseite der dritten Kupplung (78) verbunden ist.

13. Erntemaschine (10) nach Anspruch 11 oder 12, **dadurch gekennzeichnet, dass** ein Abschnitt (80) der Querwelle (58, 80, 90) sich durch die Riemenscheibe (82) erstreckt, und dass die dritte Kupplung (78) auf der den Winkelgetrieben (52, 64) abgewandten Seite der Riemenscheibe (82) angeordnet ist und ausgangsseitig durch eine Hohlwelle (106), innerhalb der sich der Abschnitt der Querwelle (80) befindet, mit der Riemenscheibe (82) und ggf. dem Antriebsstrang der Hydropumpe (102) verbunden ist.

14. Erntemaschine (10) nach einem der vorhergehenden Ansprüche, **dadurch gekennzeichnet, dass** die Winkelgetriebe (52, 64) Kegelzahnradgetriebe sind.

## Patentansprüche (Patentansprüche für folgende(n) Vertragsstaat(en): DE)

1. Selbstfahrende landwirtschaftliche Erntemaschine (10), umfassend:
einen sich in einer Vorwärtsfahrtrichtung erstreckenden Rahmen (12), der durch im Eingriff mit dem Erdboden befindliche Mittel (14, 16) abgestützt wird und durch die genannten Mittel (14, 16) in der Vorwärtsrichtung bewegbar ist,
Arbeitsorgane (26, 28) zur Aufnahme und/oder Bearbeitung von Erntegut, die über einen Treibriemen (84) antreibbar sind, der durch eine Riemenscheibe (82) mit horizontal und quer zur Vorwärtsrichtung orientierter Drehachse antreibbar ist,
einen am Rahmen (12) abgestützten ersten Verbrennungsmotor (36) mit einer ersten Kurbelwelle (40),
einen am Rahmen (12) abgestützten zweiten Verbrennungsmotor (38) mit einer zweiten Kurbelwelle (42),
und ein in Vorwärtsrichtung vor den Verbrennungsmotoren (36, 38) angeordnetes Verbindungsgetriebe, das mit der ersten Kurbelwelle (40), der zweiten Kurbelwelle (42) und der Riemenscheibe (82) antriebsverbunden oder-bindbar ist,
wobei die beiden Verbrennungsmotoren (36, 38) bezüglich der Vorwärtsrichtung seitlich nebeneinander angeordnet sind und die Kurbelwellen (40, 42) sich in der Vorwärtsrichtung erstrecken,
**dadurch gekennzeichnet, dass** das Verbindungsgetriebe ein erstes und ein zweites Winkelgetriebe (52, 64) umfasst, die jeweils mit einer der Kurbelwellen (40, 24) und mit einer quer angeordneten Querwelle (54, 58, 80, 90) antriebsverbindbar oder antriebsverbunden sind,
dass die Querwelle (54, 58, 80, 90) mit der Riemenscheibe (82) verbindbar oder verbunden ist,
dass die Riemenscheibe (82) auf einer ersten Seite des zweiten Winkeigetriebes (64) angeordnet ist, während sich das erste Winkelgetriebe (52) auf einer zweiten Seite des zweiten Winkelgetriebes (64) befindet,
dass die Querwelle (58, 80, 90) sich zwischen den Winkelgetrieben (52, 64) aus mehreren, getrennten Abschnitten (58, 80, 90) zusammensetzt
und dass zwischen die jeweils mit einem Winkelgetriebe (52, 64) verbundenen Abschnitte (58, 90) der Querwelle (58, 80, 90) eine Gelenkwelle (92) eingefügt ist.

2. Erntemaschine (10) nach Anspruch 1, **dadurch gekennzeichnet, dass** eine erste Kupplung (56) zwischen der ersten Kurbelwelle (40) und der Querwelle (54, 58, 80, 90) angeordnet ist.

3. Erntemaschine (10) nach Anspruch 2, **dadurch gekennzeichnet, dass** die erste Kupplung (56) zwischen der ersten Kurbelwelle (40) und einem ersten Winkelgetriebe (52) angeordnet ist.

4. Erntemaschine (10) nach einem der Ansprüche 1 bis 3, **dadurch gekennzeichnet, dass** eine zweite Kupplung (60) zwischen der zweiten Kurbelwelle (42) und der Querwelle (54, 58, 80, 90) angeordnet ist.

5. Erntemaschine (10) nach Anspruch 4, **dadurch gekennzeichnet, dass** die zweite Kupplung (60) zwischen der zweiten Kurbelwelle (42) und einem zweiten Winkelgetriebe (64) angeordnet ist.

6. Erntemaschine (10) nach einem der Ansprüche 1 bis 5, **dadurch gekennzeichnet, dass** ein Pumpenaggregat (74) mit der Abtriebsseite der Kupplungen (56, 60) in Antriebsverbindung steht.

7. Erntemaschine (10) nach Anspruch 6, **dadurch gekennzeichnet, dass** das Pumpenaggregat (74) durch eine Antriebsverbindung antreibbar ist, die durch eine zwischen der ersten Kupplung (56) und dem ersten, von der Riemenscheibe beabstandeten Winkelgetriebe (52) angeordnete Welle (104) antreibbar ist.

8. Erntemaschine (10) nach einem der vorhergehenden Ansprüche, **dadurch gekennzeichnet, dass** die Verbrennungsmotoren (36, 38) unabhängig voneinander am Rahmen (12) der Erntemaschine befestigt sind.

9. Erntemaschine (10) nach einem der vorhergehenden Ansprüche, **dadurch gekennzeichnet, dass** die Winkelgetriebe (52, 64) jeweils am Verbrennungsmotor (36, 38) befestigt sind.

10. Erntemaschine (10) nach einem der vorhergehenden Ansprüche, **dadurch gekennzeichnet, dass** zwischen der Querwelle (54, 58, 80, 90) und der Riemenscheibe (82) eine dritte Kupplung (78) eingefügt ist.

11. Erntemaschine (10) nach Anspruch 10, **dadurch gekennzeichnet, dass** eine Hydropumpe (102) zum Antrieb eines Einzugsförderers (22) und/oder Erntevorsatzes (20) mit der Ausgangsseite der dritten Kupplung (78) verbunden ist.

12. Erntemaschine (10) nach Anspruch 10 oder 11, **dadurch gekennzeichnet, dass** ein Abschnitt (80) der Querwelle (58, 80, 90) sich durch die Riemenscheibe (82) erstreckt, und dass die dritte Kupplung (78) auf der den Winkelgetrieben (52, 64) abgewandten Seite der Riemenscheibe (82) angeordnet ist und ausgangsseitig durch eine Hohlwelle (106), innerhalb der sich der Abschnitt der Querwelle (80) befindet, mit der Riemenscheibe (82) und ggf. dem Antriebsstrang der Hydropumpe (102) verbunden ist.

13. Erntemaschine (10) nach einem der vorhergehenden Ansprüche, **dadurch gekennzeichnet, dass** die Winkelgetriebe (52, 64) Kegelzahnradgetriebe sind.

## Claims (Claims for the following Contracting State(s): AT, BE, BG, CH, CY, CZ, DK, EE, ES, FI, FR, GB, GR, HR, HU, IE, IS, IT, LI, LT, LU, LV, MC, MK, NL, NO, PL, PT, RO, SE, SI, SK, TR)

1. Self-propelled agricultural harvesting machine (10), comprising:
a frame (12) which extends in a forwards direction of travel, is supported by means (14, 16) which are in engagement with the ground, and is moveable in the forwards direction by the means (14, 16) mentioned,
working members (26, 28) for picking up and/or processing crop, said working members being driveable via a driving belt (84) which is driveable by means of a sheave (82) with an axis of rotation oriented horizontally and transversely with respect to the forwards direction,
a first internal combustion engine (36) which is supported on the frame (12) and has a first crankshaft (40),
a second internal combustion engine (38) which is supported on the frame (12) and has a second crankshaft (42),
and a connecting gearing which is arranged in front of the internal combustion engines (36, 38) in the forwards direction and is connected or is connectable in terms of drive to the first crankshaft (40), the second crankshaft (42) and the sheave (82),
wherein the two internal combustion engines (36, 38) are arranged laterally next to each other with respect to the forwards direction, and the crankshafts (40, 42) extend in the forwards direction,
**characterized in that** the connecting gearing comprises a first and a second angular gearing (52, 64) which are each connectable or are connected in terms of drive to one of the crankshafts (40, 24) and to a transversely arranged transverse shaft (54, 58, 80, 90), **in that** the transverse shaft (54, 58, 80, 90) is connectable or is connected to the sheave (82), and **in that** the sheave (82) is arranged on a first side of the second angular gearing (64) while the first angular gearing (52) is located on a second side of the second angular gearing (64).

2. Harvesting machine (10) according to Claim 1, **characterized in that** a first coupling (56) is arranged between the first crankshaft (40) and the transverse shaft (54, 58, 80, 90).

3. Harvesting machine (10) according to Claim 2, **characterized in that** the first coupling (56) is arranged between the first crankshaft (40) and a first angular gearing (52).

4. Harvesting machine (10) according to one of Claims 1 to 3, **characterized in that** a second coupling (60) is arranged between the second crankshaft (42) and the transverse shaft (54, 58, 80, 90).

5. Harvesting machine (10) according to Claim 4, **characterized in that** the second coupling (60) is arranged between the second crankshaft (42) and a second angular gearing (64).

6. Harvesting machine (10) according to one of Claims 1 to 5, **characterized in that** a pump unit (74) is connected in terms of drive to the output side of the couplings (56, 60).

7. Harvesting machine (10) according to Claim 6, **characterized in that** the pump unit (74) is driveable by a driving connection which is driveable by a shaft (104) arranged between the first coupling (56) and the first angular gearing (52) which is spaced apart from the sheave.

8. Harvesting machine (10) according to one of the preceding claims, **characterized in that** the internal combustion engines (36, 38) are fastened independently of each other to the frame (12) of the harvesting machine.

9. Harvesting machine (10) according to one of the preceding claims, **characterized in that** the angular gearings (52, 64) are in each case fastened to the internal combustion engine (36, 38).

10. Harvesting machine (10) according to one of the preceding claims, **characterized in that** the transverse shaft (58, 80, 90) is composed of a plurality of separate sections (58, 80, 90) between the angular gearings (52, 64), and **in that** a propeller shaft (92) is fitted between those sections (58, 90) of the transverse shaft (58, 80, 90) that are in each case connected to an angular gearing (52, 64).

11. Harvesting machine (10) according to one of the preceding claims, **characterized in that** a third coupling (78) is fitted between the transverse shaft (54, 58, 80, 90) and the sheave (82).

12. Harvesting machine (10) according to Claim 11, **characterized in that** a hydraulic pump (102) for driving an intake conveyer (22) and/or header (20) is connected to the output side of the third coupling (78).

13. Harvesting machine (10) according to Claim 11 or 12, **characterized in that** a section (80) of the transverse shaft (58, 80, 90) extends through the sheave (82), and **in that** the third coupling (78) is arranged on that side of the sheave (82) which faces away from the angular gearings (52, 64), and is connected on the output side to the sheave (82) and optionally to the drive train of the hydraulic pump (102) by a hollow shaft (106) within which the section of the transverse shaft (80) is located.

14. Harvesting machine (10) according to one of the preceding claims, **characterized in that** the angular gearings (52, 64) are bevel gearings.

## Claims (Claims for the following Contracting State(s): DE)

1. Self-propelled agricultural harvesting machine (10), comprising:
a frame (12) which extends in a forwards direction of travel, is supported by means (14, 16) which are in engagement with the ground, and is moveable in the forwards direction by the means (14, 16) mentioned,
working members (26, 28) for picking up and/or processing crop, said working members being driveable via a driving belt (84) which is driveable by means of a sheave (82) with an axis of rotation oriented horizontally and transversely with respect to the forwards direction, a first internal combustion engine (36) which is supported on the frame (12) and has a first crankshaft (40),
a second internal combustion engine (38) which is supported on the frame (12) and has a second crankshaft (42),
and a connecting gearing which is arranged in front of the internal combustion engines (36, 38) in the forwards direction and is connected or is connectable in terms of drive to the first crankshaft (40), the second crankshaft (42) and the sheave (82),
wherein the two internal combustion engines (36, 38) are arranged laterally next to each other with respect to the forwards direction, and the crankshafts (40, 42) extend in the forwards direction,
**characterized in that** the connecting gearing comprises a first and a second angular gearing (52, 64) which are each connectable or are connected in terms of drive to one of the crankshafts (40, 24) and to a transversely arranged transverse shaft (54, 58, 80, 90),
**in that** the transverse shaft (54, 58, 80, 90) is connectable or is connected to the sheave (82), **in that** the sheave (82) is arranged on a first side of the second angular gearing (64) while the first angular gearing (52) is located on a second side of the second angular gearing (64), **in that** the transverse shaft (58, 80, 90) is composed of a plurality of separate sections (58, 80, 90) between the angular gearings (52, 64),
and **in that** a propeller shaft (92) is fitted between those sections (58, 90) of the transverse shaft (58, 80, 90) that are in each case connected to an angular gearing (52, 64).

2. Harvesting machine (10) according to Claim 1, **characterized in that** a first coupling (56) is arranged between the first crankshaft (40) and the transverse shaft (54, 58, 80, 90).

3. Harvesting machine (10) according to Claim 2, **characterized in that** the first coupling (56) is arranged between the first crankshaft (40) and a first angular gearing (52).

4. Harvesting machine (10) according to one of Claims 1 to 3, **characterized in that** a second coupling (60) is arranged between the second crankshaft (42) and the transverse shaft (54, 58, 80, 90).

5. Harvesting machine (10) according to Claim 4, **characterized in that** the second coupling (60) is arranged between the second crankshaft (42) and a second angular gearing (64).

6. Harvesting machine (10) according to one of Claims 1 to 5, **characterized in that** a pump unit (74) is connected in terms of drive to the output side of the couplings (56, 60).

7. Harvesting machine (10) according to Claim 6, **characterized in that** the pump unit (74) is driveable by a driving connection which is driveable by a shaft (104) arranged between the first coupling (56) and the first angular gearing (52) which is spaced apart from the sheave.

8. Harvesting machine (10) according to one of the preceding claims, **characterized in that** the internal combustion engines (36, 38) are fastened independently of each other to the frame (12) of the harvesting machine.

9. Harvesting machine (10) according to one of the preceding claims, **characterized in that** the angular gearings (52, 64) are in each case fastened to the internal combustion engine (36, 38).

10. Harvesting machine (10) according to one of the preceding claims, **characterized in that** a third coupling (78) is fitted between the transverse shaft (54, 58, 80, 90) and the sheave (82).

11. Harvesting machine (10) according to Claim 10, **characterized in that** a hydraulic pump (102) for driving an intake conveyer (22) and/or header (20) is connected to the output side of the third coupling (78).

12. Harvesting machine (10) according to Claim 10 or 11, **characterized in that** a section (80) of the transverse shaft (58, 80, 90) extends through the sheave (82), and **in that** the third coupling (78) is arranged on that side of the sheave (82) which faces away from the angular gearings (52, 64), and is connected on the output side to the sheave (82) and optionally to the drive train of the hydraulic pump (102) by a hollow shaft (106) within which the section of the transverse shaft (80) is located.

13. Harvesting machine (10) according to one of the preceding claims, **characterized in that** the angular gearings (52, 64) are bevel gearings.

## Revendications (Revendications pour l'(les) Etat(s) contractant(s) suivant(s): AT, BE, BG, CH, CY, CZ, DK, EE, ES, FI, FR, GB, GR, HR, HU, IE, IS, IT, LI, LT, LU, LV, MC, MK, NL, NO, PL, PT, RO, SE, SI, SK, TR)

1. Moissonneuse agricole automobile (10), comprenant :
un châssis (12) s'étendant dans une direction de conduite vers l'avant, qui est supporté par des moyens (14, 16) en contact avec le sol et qui peut être déplacé par lesdits moyens (14, 16) dans la direction d'avance,
des organes de travail (26, 28) pour recevoir et/ou traiter la récolte, qui peuvent être entraînés par le biais d'une courroie d'entraînement (84) qui peut être entraînée par une poulie à courroie (82) avec un axe de rotation orienté horizontalement et transversalement à la direction d'avance,
un premier moteur à combustion interne (36) supporté sur le châssis (12), avec un premier vilebrequin (40),
un deuxième moteur à combustion interne (38) supporté sur le châssis (12), avec un deuxième vilebrequin (42),
et un mécanisme de liaison disposé dans la direction d'avance avant les moteurs à combustion interne (36, 38), lequel est connecté ou peut être connecté par entraînement au premier vilebrequin (40), au deuxième vilebrequin (42) et à la poulie à courroie (82),
les deux moteurs à combustion interne (36, 38) étant disposés latéralement l'un à côté de l'autre par rapport à la direction d'avance et les vilebrequins (40, 42) s'étendant dans la direction d'avance,
**caractérisée en ce que** le mécanisme de liaison comprend un premier et un deuxième renvoi d'angle (52, 64), lesquels peuvent être connectés ou sont connectés par entraînement à chaque fois à l'un des vilebrequins (40, 24) et à un arbre transversal disposé transversalement (54, 58, 80, 90),
**en ce que** l'arbre transversal (54, 58, 80, 90) peut être connecté ou est connecté à la poulie à courroie (82), et
**en ce que** la poulie à courroie (82) est disposée sur un premier côté du deuxième renvoi d'angle (64), tandis que le premier renvoi d'angle (52) se trouve sur un deuxième côté du deuxième renvoi d'angle (64).

2. Moissonneuse (10) selon la revendication 1, **caractérisée en ce qu'**un premier embrayage (56) est disposé entre le premier vilebrequin (40) et l'arbre transversal (54, 58, 80, 90).

3. Moissonneuse (10) selon la revendication 2, **caractérisée en ce que** le premier embrayage (56) est disposé entre le premier vilebrequin (40) et un premier renvoi d'angle (52).

4. Moissonneuse (10) selon l'une quelconque des revendications 1 à 3, **caractérisée en ce qu'**un deuxième embrayage (60) est disposé entre le deuxième vilebrequin (42) et l'arbre transversal (54, 58, 80, 90).

5. Moissonneuse (10) selon la revendication 4, **caractérisée en ce que** le deuxième embrayage (60) est disposé entre le deuxième vilebrequin (42) et un deuxième renvoi d'angle (64).

6. Moissonneuse (10) selon l'une quelconque des revendications 1 à 5, **caractérisée en ce qu'**un groupe de pompe (74) est en liaison d'entraînement avec le côté de sortie des embrayages (56, 60).

7. Moissonneuse (10) selon la revendication 6, **caractérisée en ce que** le groupe de pompe (74) peut être entraîné par une liaison par entraînement qui peut être entraînée par un arbre (104) disposé entre le premier embrayage (56) et le premier renvoi d'angle (52) espacé de la poulie à courroie.

8. Moissonneuse (10) selon l'une quelconque des revendications précédentes, **caractérisée en ce que** les moteurs à combustion interne (36, 38) sont fixés indépendamment l'un de l'autre au châssis (12) de la moissonneuse.

9. Moissonneuse (10) selon l'une quelconque des revendications précédentes, **caractérisée en ce que** les renvois d'angle (52, 64) sont chacun fixés au moteur à combustion interne (36, 38).

10. Moissonneuse (10) selon l'une quelconque des revendications précédentes, **caractérisée en ce que** l'arbre transversal (58, 80, 90) se compose de plusieurs portions séparées (58, 80, 90) entre les renvois d'angle (52, 64) et **en ce qu'**entre les portions (58, 90) de l'arbre transversal (58, 80, 90) connectées à chaque fois à un renvoi d'angle (52, 64) est inséré un arbre articulé (92).

11. Moissonneuse (10) selon l'une quelconque des revendications précédentes, **caractérisée en ce qu'**entre l'arbre transversal (54, 58, 80, 90) et la poulie à courroie (82) est inséré un troisième embrayage (78).

12. Moissonneuse (10) selon la revendication 11, **caractérisée en ce qu'**une pompe hydraulique (102) pour l'entraînement d'un transporteur d'amenée (22) et/ou d'une tête de récolte (20) est connectée au côté de sortie du troisième embrayage (78).

13. Moissonneuse (10) selon la revendication 11 ou 12, **caractérisée en ce qu'**une portion (80) de l'arbre transversal (58, 80, 90) s'étend à travers la poulie à courroie (82) et **en ce que** le troisième embrayage (78) est disposé sur le côté de la poulie à courroie (82) opposé au renvoi d'angle (52, 64) et est connecté du côté de la sortie par un arbre creux (106), à l'intérieur duquel se trouve la portion de l'arbre transversal (80), à la poulie à courroie (82) et éventuellement à la chaîne cinématique de la pompe hydraulique (102).

14. Moissonneuse (10) selon l'une quelconque des revendications précédentes, **caractérisée en ce que** les renvois d'angle (52, 64) sont des engrenages coniques.

## Revendications (Revendications pour l'(les) Etat(s) contractant(s) suivant(s): DE)

1. Moissonneuse agricole automobile (10), comprenant :
un châssis (12) s'étendant dans une direction de conduite vers l'avant, qui est supporté par des moyens (14, 16) en contact avec le sol et qui peut être déplacé par lesdits moyens (14, 16) dans la direction d'avance,
des organes de travail (26, 28) pour recevoir et/ou traiter la récolte, qui peuvent être entraînés par le biais d'une courroie d'entraînement (84) qui peut être entraînée par une poulie à courroie (82) avec un axe de rotation orienté horizontalement et transversalement à la direction d'avance,
un premier moteur à combustion interne (36) supporté sur le châssis (12), avec un premier vilebrequin (40),
un deuxième moteur à combustion interne (38) supporté sur le châssis (12), avec un deuxième vilebrequin (42),
et un mécanisme de liaison disposé dans la direction d'avance avant les moteurs à combustion interne (36, 38), lequel est connecté ou peut être connecté par entraînement au premier vilebrequin (40), au deuxième vilebrequin (42) et à la poulie à courroie (82),
les deux moteurs à combustion interne (36, 38) étant disposés latéralement l'un à côté de l'autre par rapport à la direction d'avance et les vilebrequins (40, 42) s'étendant dans la direction d'avance,
**caractérisée en ce que** le mécanisme de liaison comprend un premier et un deuxième renvoi d'angle (52, 64), lesquels peuvent être connectés ou sont connectés par entraînement à chaque fois à l'un des vilebrequins (40, 24) et à un arbre transversal disposé transversalement (54, 58, 80, 90),
**en ce que** l'arbre transversal (54, 58, 80, 90) peut être connecté ou est connecté à la poulie à courroie (82),
**en ce que** la poulie à courroie (82) est disposée sur un premier côté du deuxième renvoi d'angle (64), tandis que le premier renvoi d'angle (52) se trouve sur un deuxième côté du deuxième renvoi d'angle (64),
**en ce que** l'arbre transversal (58, 80, 90) se compose de plusieurs portions séparées (58, 80, 90) entre les renvois d'angle (52, 64)
et **en ce qu'**entre les portions (58, 90) de l'arbre transversal (58, 80, 90) connectées à chaque fois à un renvoi d'angle (52, 64) est inséré un arbre articulé (92).

2. Moissonneuse (10) selon la revendication 1, **caractérisée en ce qu'**un premier embrayage (56) est disposé entre le premier vilebrequin (40) et l'arbre transversal (54, 58, 80, 90).

3. Moissonneuse (10) selon la revendication 2, **caractérisée en ce que** le premier embrayage (56) est disposé entre le premier vilebrequin (40) et un premier renvoi d'angle (52).

4. Moissonneuse (10) selon l'une quelconque des revendications 1 à 3, **caractérisée en ce qu'**un deuxième embrayage (60) est disposé entre le deuxième vilebrequin (42) et l'arbre transversal (54, 58, 80, 90).

5. Moissonneuse (10) selon la revendication 4, **caractérisée en ce que** le deuxième embrayage (60) est disposé entre le deuxième vilebrequin (42) et un deuxième renvoi d'angle (64).

6. Moissonneuse (10) selon l'une quelconque des revendications 1 à 5, **caractérisée en ce qu'**un groupe de pompe (74) est en liaison d'entraînement avec le côté de sortie des embrayages (56, 60).

7. Moissonneuse (10) selon la revendication 6, **caractérisée en ce que** le groupe de pompe (74) peut être entraîné par une liaison par entraînement qui peut être entraînée par un arbre (104) disposé entre le premier embrayage (56) et le premier renvoi d'angle (52) espacé de la poulie à courroie.

8. Moissonneuse (10) selon l'une quelconque des revendications précédentes, **caractérisée en ce que** les moteurs à combustion interne (36, 38) sont fixés indépendamment l'un de l'autre au châssis (12) de la moissonneuse.

9. Moissonneuse (10) selon l'une quelconque des revendications précédentes, **caractérisée en ce que** les renvois d'angle (52, 64) sont chacun fixés au moteur à combustion interne (36, 38).

10. Moissonneuse (10) selon l'une quelconque des revendications précédentes, **caractérisée en ce qu'**entre l'arbre transversal (54, 58, 80, 90) et la poulie à courroie (82) est inséré un troisième embrayage (78).

11. Moissonneuse (10) selon la revendication 10, **caractérisée en ce qu'**une pompe hydraulique (102) pour l'entraînement d'un transporteur d'amenée (22) et/ou d'une tête de récolte (20) est connectée au côté de sortie du troisième embrayage (78).

12. Moissonneuse (10) selon la revendication 10 ou 11, **caractérisée en ce qu'**une portion (80) de l'arbre transversal (58, 80, 90) s'étend à travers la poulie à courroie (82) et **en ce que** le troisième embrayage (78) est disposé sur le côté de la poulie à courroie (82) opposé au renvoi d'angle (52, 64) et est connecté du côté de la sortie par un arbre creux (106), à l'intérieur duquel se trouve la portion de l'arbre transversal (80), à la poulie à courroie (82) et éventuellement à la chaîne cinématique de la pompe hydraulique (102).

13. Moissonneuse (10) selon l'une quelconque des revendications précédentes, **caractérisée en ce que** les renvois d'angle (52, 64) sont des engrenages coniques.
